# EUROPEAN PATENT APPLICATION

(11) **EP 4 563 008 A1**
(43) Date of publication of application: **04.06.2025**
(21) Application number: 22953208.0
(22) Date of filing: 28.10.2022
(51) Int. Cl.: A23L 27/00, A23L 2/00, A23L 2/38, A23L 2/56, A23L 5/20, A23L 11/00, A23L 11/65, A23L 13/00, A23L 27/20, C11B 9/00

(54) **FRAGRANCE COMPOSITION AND FOOD OR BEVERAGE**

(30) Priority: 26.07.2022 JP 2022118346
(71) Applicant: Takasago International Corporation, Tokyo 144-8721 (JP)
(72) Inventor: KAKUMU Yukari, Hiratsuka-shi, Kanagawa 254-0073 (JP); YAMAGUCHI Kayoko, Hiratsuka-shi, Kanagawa 254-0073 (JP); YOSHINARI Rie, Hiratsuka-shi, Kanagawa 254-0073 (JP)
(74) Representative: Hoffmann Eitle
(86) International application number: PCT/JP2022/040383
(87) International publication number: WO 2024/024120

(57) **Abstract**

The present invention relates to a technique for masking unpleasant odor (off-flavor) generated from a food or beverage. One embodiment of the present invention provides an unpleasant odor (off-flavor) suppressing agent, a fragrance composition, a food or beverage in which an unpleasant odor (off-flavor) is masked, a production method of the food or beverage, and a method for masking an unpleasant odor (off-flavor). The present invention makes it possible to suppress an unpleasant odor (off-flavor) of a food or beverage by using, as active ingredient, one or more selected from the group consisting of oleic acid, β-damascenone, 4-methyl-2-phenyl-2-pentenal, menthyl 3-hydroxybutyrate, dimethyl benzyl carbinyl butyrate and methyl 4-tert-butyl phenylacetate.

## Description

### TECHNICAL FIELD

The present invention relates to a flavor for masking unpleasant odor (off-flavor) components generated from a food or beverage product, and a masked food or beverage product.

### BACKGROUND ART

In response to a worldwide increase in health consciousness, plant-based proteins are in increasing demand. Under such circumstances, the expanded use of soybeans, which are particularly important as a protein source, often involves the problem of how to reduce (or mask) their grassy smell. As a substance responsible for their grassy smell, n-hexanal generated upon lipid oxidation has been identified (Non-patent Literature 1). Moreover, n-hexanal is one of the substances responsible for odors generated upon oxidation of fats or oils contained in various food or beverage products including soybean- and other plant-derived food products and processed meat products, and n-hexanal also becomes a problem in the manufacture and distribution of these products (Patent Literature 1).

As a method for masking a grassy smell derived from n-hexanal, Patent Literature 1 discloses a method which comprises adding one or more members selected from the group consisting of E-beta-damascone, S-(2-methyl-3-furyl)ethanethioate, beta-caryophyllene oxide, beta-ionone, 2,5-dihydroxy-1,4-dithiane, methyl anthranilate, S-furfuryl thioformate, 1-isothiocyanate-3-(methylthio)propane, nootkatone, 1,4-dioxacycloheptadecane-5,17-dione, sclareol and sclareolide. Moreover, Non-patent Literature 1 discloses a method which comprises incorporating a certain amount of α-pinene, which has a refreshing note and is contained in herbs, etc., as identified by screening from a food component library with the olfactory receptor OR2W1 responsive to n-hexanal.

However, since n-hexanal is contained in various food or beverage products, there has been a demand for the development of techniques which allow more universal and effective masking of a grassy smell derived from n-hexanal.

### CITATION LIST

### Non-Patent Literature

Non-patent Literature 1: Soy protein research, Japan, Vol. 23 (2020), pages 159-164

### Patent Literature

Patent Literature 1: WO2021/193429A1

### SUMMARY OF INVENTION

### Technical Problem

The present invention aims to provide techniques which allow masking of unpleasant odors (off-flavors) generated from food or beverage products.

One embodiment of the present invention is directed to the provision of a method for making less susceptible to (i.e., masking) a grassy smell derived from n-hexanal, etc., without affecting the flavor and taste of food or beverage products.

### Solution to Problem

As a result of examination on various flavor compounds to solve the above problem, the inventors of the present invention have found that oleic acid, β-damascenone, 4-methyl-2-phenyl-2-pentenal, menthyl 3-hydroxybutyrate, dimethyl benzyl carbinyl butyrate and methyl 4-TERT-butylphenylacetate suppress a n-hexanal odor without impairing the flavor and taste of food or beverage products.

The present invention includes [1] to [26] shown below.

[1] A suppressor for an unpleasant odor (off-flavor) from a food or beverage product, which comprises one or more members selected from the group consisting of oleic acid, β-damascenone, 4-methyl-2-phenyl-2-pentenal, menthyl 3-hydroxybutyrate, dimethyl benzyl carbinyl butyrate and methyl 4-TERT-butylphenylacetate as an active ingredient(s).

[2] The suppressor for an unpleasant odor (off-flavor) from a food or beverage product according to [1] above, which may further comprise one or more members selected from the group consisting of 2,3-hexanedione, thymol, lauric acid, carvacrol and isoambrettolide.

[3] The suppressor according to [1] or [2] above, wherein the food or beverage product comprises one or more members selected from the group consisting of a plant-derived food or beverage product, a processed meat product and an edible processed fat or oil.

[4] The suppressor according to [3] above, wherein the plant is a pulse.

[5] The suppressor according to [4] above, wherein the pulse is soybean.

[6] The suppressor according to any one of [1] to [5] above, wherein the unpleasant odor (off-flavor) is a n-hexanal odor.

[7] A flavor composition for suppressing an unpleasant odor (off-flavor) derived from a plant-derived food or beverage product, a processed meat product or an edible processed fat or oil, which comprises one or more members selected from the group consisting of oleic acid, β-damascenone, 4-methyl-2-phenyl-2-pentenal, menthyl 3-hydroxybutyrate, dimethyl benzyl carbinyl butyrate and methyl 4-TERT-butylphenylacetate as an active ingredient(s).

[8] The flavor composition for suppressing an unpleasant odor (off-flavor) derived from a plant-derived food or beverage product, a processed meat product or an edible processed fat or oil according to [7] above, which may further comprise one or more members selected from the group consisting of 2,3-hexanedione, thymol, lauric acid, carvacrol and isoambrettolide.

[9] The flavor composition according to [7] or [8] above, wherein the plant is a pulse.

[10] The flavor composition according to [9] above, wherein the pulse is soybean.

[11] The flavor composition according to any one of [7] to [10] above, wherein the unpleasant odor (off-flavor) is a n-hexanal odor.

[12] A food or beverage product comprising one or more members selected from the group consisting of a plant-derived food or beverage product, a processed meat product and an edible processed fat or oil, wherein the food or beverage product comprises one or more members selected from the group consisting of oleic acid, β-damascenone, 4-methyl-2-phenyl-2-pentenal, menthyl 3-hydroxybutyrate, dimethyl benzyl carbinyl butyrate and methyl 4-TERT-butylphenylacetate as an active ingredient(s).

[13] The food or beverage product comprising one or more members selected from the group consisting of a plant-derived food or beverage product, a processed meat product and an edible processed fat or oil according to [12] above, which may further comprise one or more members selected from the group consisting of 2,3-hexanedione, thymol, lauric acid, carvacrol and isoambrettolide.

[14] The food or beverage product according to [12] or [13] above, wherein the plant is a pulse.

[15] The food or beverage product according to [14] above, wherein the pulse is soybean.

[16] The food or beverage product according to any one of [12] to [15] above, wherein the unpleasant odor (off-flavor) is a n-hexanal odor.

[17] A production process for a food or beverage product, which comprises adding one or more members selected from the group consisting of oleic acid, β-damascenone, 4-methyl-2-phenyl-2-pentenal, menthyl 3-hydroxybutyrate, dimethyl benzyl carbinyl butyrate and methyl 4-TERT-butylphenylacetate, such that the one or more members are contained in the concentration range of 0.01 ppt to 100 ppm.

[18] The production process for a food or beverage product according to [17] above, which comprises further adding one or more members selected from the group consisting of 2,3-hexanedione, thymol, lauric acid, carvacrol and isoambrettolide.

[19] The production process according to [17] or [18] above, wherein the food or beverage product comprises one or more members selected from the group consisting of a plant-derived food product, a processed meat product and an edible processed fat or oil.

[20] The production process according to [19] above, wherein the plant is a pulse.

[21] The production process according to [20] above, wherein the pulse is soybean.

[22] A masking method for an unpleasant odor (off-flavor) derived from a plant-derived food or beverage product, a processed meat product or an edible processed fat or oil, which comprises adding one or more members selected from the group consisting of oleic acid, β-damascenone, 4-methyl-2-phenyl-2-pentenal, menthyl 3-hydroxybutyrate, dimethyl benzyl carbinyl butyrate and methyl 4-TERT-butylphenylacetate, such that the one or more members are contained as an active ingredient(s).

[23] The masking method for an unpleasant odor (off-flavor) derived from a plant-derived food or beverage product, a processed meat product or an edible processed fat or oil according to [22] above, which comprises further adding one or more members selected from the group consisting of 2,3-hexanedione, thymol, lauric acid, carvacrol and isoambrettolide.

[24] The masking method according to [22] or [23] above, wherein the plant is a pulse.

[25] The masking method according to [24] above, wherein the pulse is soybean.

[26] The masking method according to any one of [22] to [25] above, wherein the unpleasant odor (off-flavor) is a n-hexanal odor.

### ADVANTAGEOUS EFFECTS OF INVENTION

According to the present invention, when a food or beverage product is supplemented with one or more members selected from the group consisting of oleic acid, β-damascenone, 4-methyl-2-phenyl-2-pentenal, menthyl 3-hydroxybutyrate, dimethyl benzyl carbinyl butyrate and methyl 4-TERT-butylphenylacetate, it is possible to mask a deteriorated odor generated upon oxidation of aroma components in the food or beverage product.

### DESCRIPTION OF EMBODIMENTS

A suppressor for unpleasant odors (off-flavors) from food or beverage products according to the present invention (hereinafter also referred to as "the suppressor of the present invention") comprises one or more members selected from the group consisting of oleic acid, β-damascenone, 4-methyl-2-phenyl-2-pentenal, menthyl 3-hydroxybutyrate, dimethyl benzyl carbinyl butyrate and methyl 4-TERT-butylphenylacetate as an active ingredient(s) (i.e., as a masking component(s)).

As a masking component for use in the present invention, oleic acid, β-damascenone, 4-methyl-2-phenyl-2-pentenal, menthyl 3-hydroxybutyrate, dimethyl benzyl carbinyl butyrate and methyl 4-TERT-butylphenylacetate may be used either alone or in combination. These compounds are all known aroma components, and their commercially available products may be used.

Moreover, the suppressor of the present invention may further comprise one or more members selected from the group consisting of 2,3-hexanedione, thymol, lauric acid, carvacrol and isoambrettolide as a masking component(s). Upon combination with these compounds, the masking effect can be further enhanced. These compounds may be used either alone or in combination, and are all known aroma components, and their commercially available products may be used.

The content of the masking component(s) in the suppressor of the present invention may be an amount effective against unpleasant odors (off-flavors) from food or beverage products, and is not limited in any way, but it is preferably 70% by mass or more, more preferably 80% by mass or more, even more preferably 90% by mass or more, particularly preferably 95% by mass or more, still even more preferably 99% by mass or more, and most preferably 99.5% by mass or more. If two or more masking components are used in combination, their content may be 100% by mass. It should be noted that if two or more masking components are used in combination, their total amount may be within the above range.

In the suppressor of the present invention, the content of oleic acid, β-damascenone, 4-methyl-2-phenyl-2-pentenal, menthyl 3-hydroxybutyrate, dimethyl benzyl carbinyl butyrate and methyl 4-TERT-butylphenylacetate is preferably 70% by mass or more, more preferably 80% by mass or more, even more preferably 90% by mass or more, particularly preferably 95% by mass or more, still even more preferably 99% by mass or more, and most preferably 99.5% by mass or more.

In addition to the masking component(s), any other components may be used as long as they do not inhibit the object and effect of the present invention. Such other components are not limited in any way, but may be exemplified by various synthetic flavors, natural flavors, natural essential oils, plant extracts, solvents and fixatives as given as examples in the flavor composition described later.

The suppressor of the present invention can be used to suppress unpleasant odors (off-flavors) from food or beverage products. The suppressor of the present invention can be particularly preferably used in food or beverage products having unpleasant odors (off-flavors) derived from plant-derived food or beverage products, processed meat products, or edible processed fats or oils. The suppressor of the present invention can make less susceptible to unpleasant odors whose major component is hexanal contained in food or beverage products, particularly plant-derived food or beverage products, processed meat products, or edible processed fats or oils. Plant-derived food or beverage products may be exemplified by pulse-derived food or beverage products, and more specifically exemplified by soybean-derived food or beverage products.

The flavor composition of the present invention is intended for suppressing unpleasant odors (off-flavors) derived from plant-derived food or beverage products, processed meat products, or edible processed fats or oils, and comprises one or more members selected from the group consisting of oleic acid, β-damascenone, 4-methyl-2-phenyl-2-pentenal, menthyl 3-hydroxybutyrate, dimethyl benzyl carbinyl butyrate and methyl 4-TERT-butylphenylacetate as an active ingredient(s) (i.e., as a masking component(s)). The flavor composition of the present invention refers to a composition used for the purpose of imparting a flavor to food or beverage products or enhancing the flavor of food or beverage products.

The flavor composition of the present invention may further comprise one or more members selected from the group consisting of 2,3-hexanedione, thymol, lauric acid, carvacrol and isoambrettolide as a masking component(s). Upon combination with these compounds, the masking effect can be further enhanced. These compounds may be used either alone or in combination.

In addition to the masking component(s), any other components may be incorporated into the flavor composition of the present invention, the food or beverage product of the present invention, etc. Examples of such other components include various synthetic flavors, natural flavors, natural essential oils, plant extracts, etc., as exemplified by natural essential oils, natural flavors, synthetic flavors and so on as appear in "Japanese Patent Office Bulletin, Collection of Well-known Prior Arts (Flavorings and Fragrances) Part II Food Flavors, P88 to 131, published on January 14, 2000."

The flavor composition of the present invention may optionally comprise commonly used components, such as a solvent (e.g., water, ethanol) and a fixative (e.g., ethylene glycol, propylene glycol, dipropylene glycol, hexylene glycol, glycerin, triethyl citrate, medium chain fatty acid triglyceride, medium chain fatty acid diglyceride, an animal or vegetable fat or oil).

The flavor composition of the present invention can be used to suppress unpleasant odors (off-flavors) derived from food or beverage products, more specifically derived from plant-derived food or beverage products, processed meat products, or edible processed fats or oils, particularly unpleasant odors whose major component is n-hexanal.

The content of the masking component(s) in the flavor composition of the present invention varies depending on other components to be incorporated, and is not determined evenly, but it may usually be in the concentration range of 0.01 ppb or more to 100000 ppm or less, preferably in the concentration range of 0.1 ppb or more to 10000 ppm or less, based on the weight of the flavor composition. If the content of the masking component(s) is less than 0.01 ppb, the masking effect of the present invention cannot be obtained, while the content exceeding 100000 ppm is not preferred because the masking component(s) per se affects the flavor.

Moreover, in the flavor composition of the present invention, the content of oleic acid, β-damascenone, 4-methyl-2-phenyl-2-pentenal, menthyl 3-hydroxybutyrate, dimethyl benzyl carbinyl butyrate and methyl 4-TERT-butylphenylacetate may usually be, for example, in the concentration range of 0.01 ppb or more to 100000 ppm or less, preferably in the concentration range of 0.1 ppb or more to 10000 ppm or less, based on the weight of the flavor composition.

The food or beverage product of the present invention is a food or beverage product comprising one or more members selected from the group consisting of a plant-derived food or beverage product, a processed meat product and an edible processed fat or oil, and comprises one or more members selected from the group consisting of oleic acid, β-damascenone, 4-methyl-2-phenyl-2-pentenal, menthyl 3-hydroxybutyrate, dimethyl benzyl carbinyl butyrate and methyl 4-TERT-butylphenylacetate as an active ingredient(s) (i.e., as a masking component(s)).

The food or beverage product of the present invention may further comprise one or more members selected from the group consisting of 2,3-hexanedione, thymol, lauric acid, carvacrol and isoambrettolide as a masking component(s). Upon combination with these compounds, the masking effect can be further enhanced. These compounds may be used either alone or in combination.

As a result of comprising these compounds as masking components, the food or beverage product of the present invention can make less susceptible to unpleasant odors (off-flavors) derived from food or beverage products, more specifically derived from plant-derived food or beverage products, processed meat products, or edible processed fats or oils, particularly unpleasant odors whose major component is hexanal. Plant-derived food or beverage products may be exemplified by pulse-derived food or beverage products, and more specifically exemplified by soybean-derived food or beverage products.

The food or beverage product of the present invention may be exemplified by those containing substances responsible for unpleasant odors (off-flavors) derived from plant-derived food or beverage products, processed meat products, or edible processed fats or oils. Examples include food or beverage products comprising one or more members selected from the group consisting of a plant-derived food or beverage product, a processed meat product and an edible processed fat or oil.

It should be noted that the term "plant-derived food or beverage product" as used herein is not limited in any way as long as it is a plant per se or a processed food product made from a plant or a plant-derived material, as exemplified by a pulse per se or a processed food product made from a pulse or a pulse-derived material. Preferred is soybean or a processed soybean product.

Likewise, the term "processed meat product" is not limited in any way as long as it is a processed food product made primarily from meat. Examples include processed fish meat products and processed livestock meat products.

Likewise, the term "edible processed fat or oil" is not limited in any way as long as it is obtained by applying some processing technique to impart a new function to a raw fat or oil. Examples include margarines, shortening, refined lard, and edible refined and processed fats or oils.

Specific examples of the food or beverage product of the present invention include beverages such as fruit beverages, vegetable beverages, soft drinks, carbonated beverages, flavored waters, functional beverages, drinkable preparations, alcoholic drinks, non-alcoholic beverages, milk beverages, and protein beverages; tea beverages or palatable beverages such as black tea, green tea, oolong tea, herbal tea, coffee, and cocoa; plant-based beverage substitutes such as soy milk beverages, oat milk beverages, almond milk beverages, and milk substitutes; fermented dairy products such as yogurts and cheeses; frozen desserts such as glaces, lacto ice creams, ice milks, and ice creams; desserts such as custard puddings, jellies, bavarian creams, and mousses; sweets such as chewing gums, candies, gummy candies, tablets, refreshing sweets, chocolates, chocolate confectionery, and junk foods; pastes or creams such as jams, dessert sauces, flour pastes, margarines, fat spreads, filling creams, flour pastes, and whipped creams; agricultural products and processed agricultural products; livestock meat and processed livestock meat products; fish meat and processed marine products; dairy fat products; cooked rice products such as ready-to-eat cooked rice and sprouted brown rice; noodles such as instant noodles, dried noodles, and chilled noodles; bakery products such as bread, steamed meat buns, and savory bread; soup products; cooked and processed food products such as ready-to-eat foods, pasta sauces, canned foods, and frozen and chilled foods; seasonings such as sauces, soy sauces, dipping sauces, broths, mayonnaises, ketchups, dressings, tube products, soup stocks, Chinese seasonings, Western seasonings, and various roux; spices; animal or vegetable edible fats or oils; and plant-based food substitutes such as seafood substitutes and meat substitutes.

Moreover, the content of the masking component(s) in the food or beverage product of the present invention may be in the concentration range of 0.01 ppt or more to 100 ppm or less, preferably in the concentration range of 0.1 ppt or more to 10 ppm or less, based on the weight of the food or beverage product. If the content of the masking component(s) is less than 0.01 ppt, the masking effect of the present invention cannot be obtained, while the content exceeding 100 ppm is not preferred because the masking component(s) per se affects the flavor of the food or beverage product.

In the food or beverage product of the present invention, the content of oleic acid, β-damascenone, 4-methyl-2-phenyl-2-pentenal, menthyl 3-hydroxybutyrate, dimethyl benzyl carbinyl butyrate and methyl 4-TERT-butylphenylacetate may be in the concentration range of 0.01 ppt or more to 100 ppm or less, preferably in the concentration range of 0.1 ppt or more to 10 ppm or less, based on the weight of the food or beverage product.

In one embodiment, the present invention provides a production process for a food or beverage product, which comprises adding one or more members selected from the group consisting of oleic acid, β-damascenone, 4-methyl-2-phenyl-2-pentenal, menthyl 3-hydroxybutyrate, dimethyl benzyl carbinyl butyrate and methyl 4-TERT-butylphenylacetate to a food or beverage product, such that the one or more members are contained in the concentration range of 0.01 ppt to 100 ppm. The concentration range of the above compound(s) is 0.01 ppt or more to 100 ppm or less, preferably 0.1 ppt or more to 10 ppm or less, based on the weight of the food or beverage product.

In this embodiment, one or more members selected from the group consisting of 2,3-hexanedione, thymol, lauric acid, carvacrol and isoambrettolide may be further added as a masking component(s).

These masking components may be used either alone or in combination. If two or more masking components are used in combination, their total concentration range may satisfy the above range. The timing of adding the masking component(s) is not limited in any way. The masking component(s) is preferably added in such a manner as not to impair the masking effect.

Moreover, in another embodiment, the present invention provides a masking method for an unpleasant odor (off-flavor) derived from a food or beverage product, more specifically derived from a plant-derived food or beverage product, a processed meat product or an edible processed fat or oil, which comprises adding one or more members selected from the group consisting of oleic acid, β-damascenone, 4-methyl-2-phenyl-2-pentenal, menthyl 3-hydroxybutyrate, dimethyl benzyl carbinyl butyrate and methyl 4-TERT-butylphenylacetate to the food or beverage product, such that the one or more members are contained as an active ingredient(s).

In this embodiment, one or more members selected from the group consisting of 2,3-hexanedione, thymol, lauric acid, carvacrol and isoambrettolide may be further added as a masking component(s), whereby the masking effect can be further enhanced.

The amount of the masking component(s) used is not limited in any way, but it is usually 0.01 ppt or more to 100 ppm or less, preferably 0.1 ppt or more to 10 ppm or less, based on the weight of the food or beverage product. If two or more masking components are used in combination, their total concentration range may satisfy the above range.

It should be noted that the suppressor and flavor composition of the present invention may be used not only in food or beverage products, but also in oral care products (e.g., dentifrices, mouth washes, oral cleaners, mouse sprays, gargles) and dish detergents, etc. This allows suppression of unpleasant odors (off-flavors) from food or beverage products remaining in the mouth or on dishes, etc.

### EXAMPLES

The present invention will be further described in more detail below by way of the following illustrative examples, although the present invention is not limited to these examples.

### Example 1 (Masking effect of oleic acid on n-hexanal odor)

To ion exchanged water, n-hexanal adjusted to a concentration of 1% by mass with 95% ethanol was added at 50 ppb. To this n-hexanal-containing aqueous solution, oleic acid was added at the concentrations indicated in Table 1, and each sample was confirmed for the intensity of the n-hexanal odor (off-flavor) (masking effect) and the intensity of the masking component per se (influence on the flavor of food or beverage products per se).

For testing, 8 well-trained panelists were selected and sensory testing was made. Assuming that the intensity of the n-hexanal odor (off-flavor) in the masking component-free n-hexanal-containing aqueous solution was "evaluated as: 4" and n-hexanal-free ion exchanged water was "evaluated as: 0," each sample was relatively evaluated for the intensity of the n-hexanal odor (masking effect) in accordance with the following evaluation criteria.

### (Evaluation criteria)

| | |
|---|---|
| Strongly feel the n-hexanal odor (off-flavor): | 4 |
| Feel the n-hexanal odor (off-flavor): | 3 |
| Slightly feel the n-hexanal odor (off-flavor): | 2 |
| Rarely feel the n-hexanal odor (off-flavor): | 1 |
| Feel no n-hexanal odor (off-flavor): | 0 |

In addition, absolute evaluation was performed on the intensity of the masking component (influence on the flavor of food or beverage products per se) in accordance with the following evaluation criteria.

### (Evaluation criteria)

| | |
|---|---|
| Strongly feel the masking component: | 4 |
| Feel the masking component: | 3 |
| Slightly feel the masking component: | 2 |
| Rarely feel the masking component: | 1 |
| Feel no masking component: | 0 |

The results obtained are as shown in Table 1, which shows the average of the evaluation results of the individual panelists.

**[Table 1]**

| Concentration of oleic acid added | Intensity of n-hexanal odor | Intensity of masking component |
|---|---|---|
| 10 ppm | 1.0 | 2.5 |
| 1 ppm | 1.1 | 1.0 |
| 500 ppb | 2.0 | 0.8 |
| 100 ppb | 2.8 | 0.8 |
| 50 ppb | 3.0 | 0.3 |
| 10 ppb | 3.3 | 0.3 |

As can be seen from the results shown in Table 1, oleic acid was found to mask the n-hexanal odor at a concentration ranging from 50 ppb or more to 10 ppm or less, and also found to have no influence on the flavor of food or beverage products per se.

### Example 2 (Masking effect of β-damascenone on n-hexanal odor)

Samples prepared in the same manner as shown in Example 1 were used to confirm β-damascenone for the intensity of the n-hexanal odor (off-flavor) (masking effect) and the intensity of the masking component (influence on the flavor of food or beverage products per se). For evaluation, the same procedures as shown in Example 1 were repeated. The results obtained are as shown in Table 2, which shows the average of the evaluation results of the individual panelists.

**[Table 2]**

| Concentration of β-damascenone added | Intensity of n-hexanal odor | Intensity of masking component |
|---|---|---|
| 1 ppb | 0.5 | 3.3 |
| 100 ppt | 1.0 | 2.6 |
| 10 ppt | 1.4 | 1.8 |
| 1 ppt | 1.6 | 1.4 |
| 0.1 ppt | 2.0 | 1.0 |
| 0.01 ppt | 2.5 | 0.9 |
| 0.001 ppt | 3.3 | 0.4 |
| 0.0001 ppt | 3.4 | 0.3 |

As can be seen from the results shown in Table 2, β-damascenone was found to mask the n-hexanal odor at a concentration ranging from 0.01 ppt or more to 100 ppt or less, and also found to have no influence on the flavor of food or beverage products per se.

### Example 3 (Masking effect of 4-methyl-2-phenyl-2-pentenal on n-hexanal odor)

Samples prepared in the same manner as shown in Example 1 were used to confirm 4-methyl-2-phenyl-2-pentenal for the intensity of the n-hexanal odor (off-flavor) (masking effect) and the intensity of the masking component (influence on the flavor of food or beverage products per se). For evaluation, the same procedures as shown in Example 1 were repeated. The results obtained are as shown in Table 3, which shows the average of the evaluation results of the individual panelists.

**[Table 3]**

| Concentration of 4-methyl-2-phenyl-2-pentenal added | Intensity of n-hexanal odor | Intensity of masking component |
|---|---|---|
| 50 ppm | 0.8 | 4.0 |
| 10 ppm | 1.0 | 3.4 |
| 5 ppm | 1.0 | 2.5 |
| 1 ppm | 1.3 | 2.3 |
| 500 ppb | 1.6 | 1.8 |
| 100 ppb | 1.8 | 1.3 |
| 10 ppb | 2.1 | 1.0 |
| 1 ppb | 2.5 | 0.4 |
| 100 ppt | 3.0 | 0.0 |

As can be seen from the results shown in Table 3, 4-methyl-2-phenyl-2-pentenal was found to mask the n-hexanal odor at a concentration ranging from 100 ppt or more to 5 ppm or less, and also found to have no influence on the flavor of food or beverage products per se.

### Example 4 (Masking effect of menthyl 3-hydroxybutyrate on n-hexanal odor)

Samples prepared in the same manner as shown in Example 1 were used to confirm menthyl 3-hydroxybutyrate for the intensity of the n-hexanal odor (off-flavor) (masking effect) and the intensity of the masking component (influence on the flavor of food or beverage products per se). For evaluation, the same procedures as shown in Example 1 were repeated. The results obtained are as shown in Table 4, which shows the average of the evaluation results of the individual panelists.

**[Table 4]**

| Concentration of menthyl 3-hydroxybutyrate added | Intensity of n-hexanal odor | Intensity of masking component |
|---|---|---|
| 30 ppm | 1.1 | 3.5 |
| 10 ppm | 1.3 | 2.9 |
| 1 ppm | 1.6 | 2.5 |
| 100 ppb | 2.1 | 2.3 |
| 10 ppb | 2.4 | 1.5 |
| 1 ppb | 2.5 | 1.5 |
| 100 ppt | 2.8 | 1.0 |
| 10 ppt | 3.4 | 1.0 |
| 1 ppt | 3.5 | 0.5 |

As can be seen from the results shown in Table 4, menthyl 3-hydroxybutyrate was found to mask the n-hexanal odor at a concentration ranging from 100 ppt or more to 10 ppm or less, and also found to have no influence on the flavor of food or beverage products per se.

### Example 5 (Masking effect of dimethyl benzyl carbinyl butyrate on n-hexanal odor)

Samples prepared in the same manner as shown in Example 1 were used to confirm dimethyl benzyl carbinyl butyrate for the intensity of the n-hexanal odor (off-flavor) (masking effect) and the intensity of the masking component (influence on the flavor of food or beverage products per se). For evaluation, the same procedures as shown in Example 1 were repeated. The results obtained are as shown in Table 5, which shows the average of the evaluation results of the individual panelists.

**[Table 5]**

| Concentration of dimethyl benzyl carbinyl butyrate added | Intensity of n-hexanal odor | Intensity of masking component |
|---|---|---|
| 1 ppm | 0.5 | 3.6 |
| 100 ppb | 0.9 | 2.6 |
| 10 ppb | 1.1 | 2.1 |
| 1 ppb | 1.6 | 1.5 |
| 100 ppt | 1.9 | 1.0 |
| 10 ppt | 2.4 | 0.9 |
| 1 ppt | 2.9 | 0.6 |
| 0.1 ppt | 3.4 | 0.3 |

As can be seen from the results shown in Table 5, dimethyl benzyl carbinyl butyrate was found to mask the n-hexanal odor at a concentration ranging from 1 ppt or more to 100 ppb or less, and also found to have no influence on the flavor of food or beverage products per se.

### Example 6 (Masking effect of methyl 4-TERT-butylphenylacetate on n-hexanal odor)

Samples prepared in the same manner as shown in Example 1 were used to confirm methyl 4-TERT-butylphenylacetate for the intensity of the n-hexanal odor (off-flavor) (masking effect) and the intensity of the masking component (influence on the flavor of food or beverage products per se). For evaluation, the same procedures as shown in Example 1 were repeated. The results obtained are as shown in Table 6, which shows the average of the evaluation results of the individual panelists.

**[Table 6]**

| Concentration of methyl 4-TERT-butylphenylacetate added | Intensity of n-hexanal odor | Intensity of masking component |
|---|---|---|
| 500 ppb | 0.5 | 3.1 |
| 100 ppb | 0.9 | 2.4 |
| 50 ppb | 1.0 | 1.8 |
| 10 ppb | 1.4 | 1.3 |
| 1 ppb | 1.5 | 0.9 |
| 100 ppt | 1.9 | 1.0 |
| 10 ppt | 2.1 | 0.8 |
| 1 ppt | 2.8 | 0.6 |
| 0.1 ppt | 2.9 | 0.0 |

As can be seen from the results shown in Table 6, methyl 4-TERT-butylphenylacetate was found to mask the n-hexanal odor at a concentration ranging from 0.1 ppt or more to 100 ppb or less, and also found to have no influence on the flavor of food or beverage products per se.

### Example 7 (Masking effect of oleic acid on the off-flavor of soy milk)

To commercially available soy milk, oleic acid was added at the concentrations indicated in Table 7, and each sample was confirmed for the intensity of the off-flavor of soy milk (masking effect) and the intensity of the masking component (influence on the flavor of soy milk per se).

For testing, 8 well-trained panelists were selected and sensory testing was made. Assuming that the intensity of the off-flavor of soy milk was "evaluated as: 4" and ion exchanged water was "evaluated as: 0," each sample was relatively evaluated for the intensity of the off-flavor (masking effect) in accordance with the following evaluation criteria.

### (Evaluation criteria)

| | |
|---|---|
| Strongly feel the off-flavor: | 4 |
| Feel the off-flavor: | 3 |
| Slightly feel the off-flavor: | 2 |
| Rarely feel the off-flavor: | 1 |
| Feel no off-flavor: | 0 |

In addition, absolute evaluation was performed on the intensity of the masking component (influence on the flavor of food or beverage products per se) in accordance with the following evaluation criteria.

### (Evaluation criteria)

| | |
|---|---|
| Strongly feel the masking component: | 4 |
| Feel the masking component: | 3 |
| Slightly feel the masking component: | 2 |
| Rarely feel the masking component: | 1 |
| Feel no masking component: | 0 |

The results obtained are as shown in Table 7, which shows the average of the evaluation results of the individual panelists.

**[Table 7]**

| Concentration of oleic acid added | Intensity of off-flavor of soy milk | Intensity of masking component |
|---|---|---|
| 1000 ppm | 0.9 | 3.3 |
| 100 ppm | 1.6 | 1.9 |
| 10 ppm | 1.8 | 1.4 |
| 1 ppm | 2.3 | 0.6 |
| 100 ppb | 3.0 | 0.1 |
| 10 ppb | 3.4 | 0.1 |

As can be seen from the results shown in Table 7, oleic acid was found to mask the off-flavor of soy milk at a concentration ranging from 100 ppb or more to 100 ppm or less, and also found to have no influence on the flavor of soy milk per se.

### Example 8 (Masking effect of β-damascenone on the off-flavor of soy milk)

To commercially available soy milk, β-damascenone was added at the concentrations indicated in Table 8, and each sample was confirmed for the intensity of the off-flavor of soy milk (masking effect) and the intensity of the masking component (influence on the flavor of soy milk per se). For evaluation, the same procedures as shown in Example 7 were repeated. The results obtained are as shown in Table 8, which shows the average of the evaluation results of the individual panelists.

**[Table 8]**

| Concentration of β-damascenone added | Intensity of off-flavor of soy milk | Intensity of masking component |
|---|---|---|
| 5 ppm | 0.3 | 4.0 |
| 1 ppm | 0.6 | 3.6 |
| 100 ppb | 1.1 | 3.0 |
| 10 ppb | 1.4 | 2.4 |
| 1 ppb | 2.1 | 1.4 |
| 100 ppt | 2.8 | 0.3 |
| 10 ppt | 2.9 | 0.1 |

As can be seen from the results shown in Table 8, β-damascenone was found to mask the off-flavor of soy milk at a concentration ranging from 10 ppt or more to 100 ppb or less, and also found to have no influence on the flavor of soy milk per se.

### Example 9 (Masking effect of 4-methyl-2-phenyl-2-pentenal on the off-flavor of soy milk)

To commercially available soy milk, 4-methyl-2-phenyl-2-pentenal was added at the concentrations indicated in Table 9, and each sample was confirmed for the intensity of the off-flavor of soy milk (masking effect) and the intensity of the masking component (influence on the flavor of soy milk per se). For evaluation, the same procedures as shown in Example 7 were repeated. The results obtained are as shown in Table 9, which shows the average of the evaluation results of the individual panelists.

**[Table 9]**

| Concentration of 4-methyl-2-phenyl-2-pentenal added | Intensity of off-flavor of soy milk | Intensity of masking component |
|---|---|---|
| 50 ppm | 0.5 | 3.9 |
| 10 ppm | 0.8 | 2.9 |
| 1 ppm | 1.1 | 1.5 |
| 100 ppb | 1.9 | 0.8 |
| 10 ppb | 2.8 | 0.4 |
| 1 ppb | 3.0 | 0.3 |

As can be seen from the results shown in Table 9, 4-methyl-2-phenyl-2-pentenal was found to mask the off-flavor of soy milk at a concentration ranging from 1 ppb or more to 10 ppm or less, and also found to have no influence on the flavor of soy milk per se.

Example 10 (Masking effect of methyl 4-TERT-butylphenylacetate on the off-flavor of soy milk)

To commercially available soy milk, methyl 4-TERT-butylphenylacetate was added at the concentrations indicated in Table 10, and each sample was confirmed for the intensity of the off-flavor of soy milk (masking effect) and the intensity of the masking component (influence on the flavor of soy milk per se).

For testing, 6 well-trained panelists were selected and sensory testing was made. For evaluation, the same procedures as shown in Example 7 were repeated. The results obtained are as shown in Table 10, which shows the average of the evaluation results of the individual panelists.

**[Table 10]**

| Concentration of methyl 4-TERT-butylphenylacetate added | Intensity of off-flavor of soy milk | Intensity of masking component |
|---|---|---|
| 100 ppm | 0.8 | 3.5 |
| 10 ppm | 1.5 | 2.3 |
| 1 ppm | 1.5 | 1.7 |
| 100 ppb | 2.0 | 0.8 |
| 10 ppb | 2.8 | 0.5 |
| 1 ppb | 3.0 | 0.3 |
| 100 ppt | 3.3 | 0.0 |

As can be seen from the results shown in Table 10, methyl 4-TERT-butylphenylacetate was found to mask the off-flavor of soy milk at a concentration ranging from 1 ppb or more to 10 ppm or less, and also found to have no influence on the flavor of soy milk per se.

### Example 11 (Masking effect of β-damascenone on n-hexanal odor)

To commercially available shortening, n-hexanal adjusted to a concentration of 1% by mass with 95% ethanol was added at 5 ppm. To this n-hexanal-containing shortening, β-damascenone was added at the concentrations indicated in Table 11, and each sample was confirmed for the intensity of the n-hexanal odor (off-flavor) (masking effect) and the intensity of the masking component (influence on the flavor of shortening per se).

For testing, 6 well-trained panelists were selected and sensory testing was made. For evaluation, the same procedures as shown in Example 1 were repeated. The results obtained are as shown in Table 11, which shows the average of the evaluation results of the individual panelists.

**[Table 11]**

| Concentration of β-damascenone added | Intensity of n-hexanal odor | Intensity of masking component |
|---|---|---|
| 100 ppb | 1.3 | 3.3 |
| 10 ppb | 1.5 | 2.7 |
| 1 ppb | 2.2 | 1.8 |
| 100 ppt | 2.8 | 0.7 |
| 10 ppt | 3.3 | 0.5 |

As can be seen from the results shown in Table 11, β-damascenone was found to mask the n-hexanal odor at a concentration ranging from 100 ppt or more to 10 ppb or less, and also found to have no influence on the flavor of shortening per se.

### Example 12 (Masking effect of dimethyl benzyl carbinyl butyrate on n-hexanal odor)

Samples prepared in the same manner as shown in Example 11 were used to confirm dimethyl benzyl carbinyl butyrate for the intensity of the n-hexanal odor (off-flavor) (masking effect) and the intensity of the masking component (influence on the flavor of shortening per se). For evaluation, the same procedures as shown in Example 11 were repeated. The results obtained are as shown in Table 12, which shows the average of the evaluation results of the individual panelists.

**[Table 12]**

| Concentration of dimethyl benzyl carbinyl butyrate added | Intensity of n-hexanal odor | Intensity of masking component |
|---|---|---|
| 10 ppm | 1.8 | 2.7 |
| 1 ppm | 2.0 | 2.0 |
| 100 ppb | 2.2 | 1.5 |
| 10 ppb | 2.5 | 1.3 |
| 1 ppb | 3.3 | 1.0 |

As can be seen from the results shown in Table 12, dimethyl benzyl carbinyl butyrate was found to mask the n-hexanal odor at a concentration ranging from 10 ppb or more to 10 ppm or less, and also found to have no influence on the flavor of shortening per se.

### Example 13 (Masking effect of methyl 4-TERT-butylphenylacetate on n-hexanal odor)

Samples prepared in the same manner as shown in Example 11 were used to confirm dimethyl 4-TERT-butylphenylacetate for the intensity of the n-hexanal odor (off-flavor) (masking effect) and the intensity of the masking component (influence on the flavor of shortening per se). For evaluation, the same procedures as shown in Example 11 were repeated. The results obtained are as shown in Table 13, which shows the average of the evaluation results of the individual panelists.

**[Table 13]**

| Concentration of methyl 4-TERT-butylphenylacetate added | Intensity of n-hexanal odor | Intensity of masking component |
|---|---|---|
| 50 ppm | 1.5 | 2.5 |
| 5 ppm | 1.8 | 2.0 |
| 500 ppb | 1.8 | 1.3 |
| 50 ppb | 2.3 | 0.8 |
| 5 ppb | 2.8 | 0.7 |

As can be seen from the results shown in Table 13, methyl 4-TERT-butylphenylacetate was found to mask the n-hexanal odor at a concentration ranging from 5 ppb or more to 50 ppm or less, and also found to have no influence on the flavor of shortening per se.

### (Composition of soybean protein suspension)

**[Table 14]**

| Raw material | Mixing ratio (parts by mass) |
|---|---|
| Efos soybean protein concentrate | 3.0% |
| Refined salt | 0.5% |
| Sugar | 0.5% |
| Water | 96.0% |

### Example 14 (Masking effect of oleic acid on soybean odor)

To a soybean protein suspension having the composition shown in Table 14, oleic acid was added at the concentrations indicated in Table 15, and each sample was confirmed for the intensity of the soybean odor (off-flavor) (masking effect) and the intensity of the masking component (influence on the flavor of the soybean protein suspension per se).

For testing, 6 well-trained panelists were selected and sensory testing was made. Assuming that the intensity of the soybean odor (off-flavor) in the soybean protein suspension was "evaluated as: 4" and ion exchanged water was "evaluated as: 0," each sample was relatively evaluated for the intensity of the soybean odor (off-flavor) (masking effect) in accordance with the following evaluation criteria.

### (Evaluation criteria)

| | |
|---|---|
| Strongly feel the soybean odor (off-flavor): | 4 |
| Feel the soybean odor (off-flavor): | 3 |
| Slightly feel the soybean odor (off-flavor): | 2 |
| Rarely feel the soybean odor (off-flavor): | 1 |
| Feel no soybean odor (off-flavor): | 0 |

In addition, absolute evaluation was performed on the intensity of the masking component (influence on the flavor of food or beverage products per se) in accordance with the following evaluation criteria.

### (Evaluation criteria)

| | |
|---|---|
| Strongly feel the masking component: | 4 |
| Feel the masking component: | 3 |
| Slightly feel the masking component: | 2 |
| Rarely feel the masking component: | 1 |
| Feel no masking component: | 0 |

The results obtained are as shown in Table 15, which shows the average of the evaluation results of the individual panelists.

**[Table 15]**

| Concentration of oleic acid added | Intensity of soybean odor | Intensity of masking component |
|---|---|---|
| 100 ppm | 0.5 | 2.7 |
| 50 ppm | 1.0 | 2.0 |
| 10 ppm | 1.0 | 1.5 |
| 5 ppm | 1.5 | 1.3 |
| 1 ppm | 1.7 | 1.0 |
| 500 ppb | 2.3 | 0.7 |
| 100 ppb | 2.7 | 0.3 |
| 50 ppb | 3.3 | 0.2 |

As can be seen from the results shown in Table 15, oleic acid was found to mask the soybean odor at a concentration ranging from 100 ppb or more to 100 ppm or less, and also found to have no influence on the flavor of the soybean protein suspension per se.

### Example 15 (Masking effect of β-damascenone on soybean odor)

Samples prepared in the same manner as shown in Example 14 were used to confirm β-damascenone for the intensity of the soybean odor (off-flavor) (masking effect) and the intensity of the masking component (influence on the flavor of the soybean protein suspension per se). For evaluation, the same procedures as shown in Example 14 were repeated. The results obtained are as shown in Table 16, which shows the average of the evaluation results of the individual panelists.

**[Table 16]**

| Concentration of β-damascenone added | Intensity of soybean odor | Intensity of masking component |
|---|---|---|
| 10 ppb | 0.3 | 3.5 |
| 1 ppb | 0.5 | 3.3 |
| 0.1 ppb | 0.8 | 2.5 |
| 10 ppt | 1.3 | 1.7 |
| 1 ppt | 1.5 | 1.0 |
| 0.1 ppt | 2.4 | 0.6 |
| 0.01 ppt | 3.0 | 0.5 |
| 0.001 ppt | 3.3 | 0.5 |

As can be seen from the results shown in Table 16, β-damascenone was found to mask the soybean odor at a concentration ranging from 0.01 ppt or more to 0.1 ppb or less, and also found to have no influence on the flavor of the soybean protein suspension per se.

### Example 16 (Masking effect of 4-methyl-2-phenyl-2-pentenal on soybean odor)

Samples prepared in the same manner as shown in Example 14 were used to confirm 4-methyl-2-phenyl-2-pentenal for the intensity of the soybean odor (off-flavor) (masking effect) and the intensity of the masking component (influence on the flavor of the soybean protein suspension per se). For evaluation, the same procedures as shown in Example 14 were repeated. The results obtained are as shown in Table 17, which shows the average of the evaluation results of the individual panelists.

**[Table 17]**

| Concentration of 4-methyl-2-phenyl-2-pentenal added | Intensity of soybean odor | Intensity of masking component |
|---|---|---|
| 50 ppm | 0.0 | 4.0 |
| 10 ppm | 0.3 | 3.5 |
| 5 ppm | 0.5 | 2.8 |
| 1 ppm | 0.8 | 1.8 |
| 500 ppb | 1.0 | 1.5 |
| 100 ppb | 1.7 | 1.2 |
| 10 ppb | 2.0 | 0.7 |
| 1 ppb | 3.0 | 0.2 |
| 100 ppt | 3.3 | 0.2 |

As can be seen from the results shown in Table 17, 4-methyl-2-phenyl-2-pentenal was found to mask the soybean odor at a concentration ranging from 1 ppb or more to 5 ppm or less, and also found to have no influence on the flavor of the soybean protein suspension per se.

### Example 17 (Masking effect of menthyl 3-hydroxybutyrate on soybean odor)

Samples prepared in the same manner as shown in Example 14 were used to confirm menthyl 3-hydroxybutyrate for the intensity of the soybean odor (off-flavor) (masking effect) and the intensity of the masking component (influence on the flavor of the soybean protein suspension per se). For evaluation, the same procedures as shown in Example 14 were repeated. The results obtained are as shown in Table 18, which shows the average of the evaluation results of the individual panelists.

**[Table 18]**

| Concentration of menthyl 3-hydroxybutyrate added | Intensity of soybean odor | Intensity of masking component |
|---|---|---|
| 30 ppm | 0.8 | 3.0 |
| 10 ppm | 1.0 | 2.5 |
| 1 ppm | 1.0 | 2.0 |
| 100 ppb | 1.7 | 1.7 |
| 10 ppb | 1.8 | 1.2 |
| 1 ppb | 2.7 | 0.8 |
| 100 ppt | 2.5 | 0.5 |
| 10 ppt | 3.2 | 0.3 |

As can be seen from the results shown in Table 18, menthyl 3-hydroxybutyrate was found to mask the soybean odor at a concentration ranging from 100 ppt or more to 30 ppm or less, and also found to have no influence on the flavor of the soybean protein suspension per se.

### Example 18 (Masking effect on soybean odor upon combination)

To a soybean protein suspension having the composition shown in Table 14, the masking components were added in combination as indicated in Table 19, thus confirming that the soybean odor (off-flavor) was more likely to be masked.

It should be noted that compounds A to K in Table 19 are as follows.
Compound A: oleic acid
Compound B: β-damascenone
Compound C: 4-methyl-2-phenyl-2-pentenal
Compound D: menthyl 3-hydroxybutyrate
Compound E: dimethyl benzyl carbinyl butyrate
Compound F: methyl 4-TERT-butylphenylacetate
Compound G: 2,3-hexanedione
Compound H: thymol
Compound I: lauric acid
Compound J: carvacrol
Compound K: isoambrettolide

**[Table 19]**

| | Test No. | | | | | | | | | | | | | |
|---|---|---|---|---|---|---|---|---|---|---|---|---|---|---|
| Compound | 1 | 2 | 3 | 4 | 5 | 6 | 7 | 8 | 9 | 10 | 11 | 12 | 13 | 14 |
| A | ○ | ○ | ○ | ○ | | | | | | | | | | |
| B | | | | | ○ | ○ | ○ | ○ | | | | | | |
| C | | | | | | | | | ○ | ○ | ○ | | | |
| D | | | | | | | | | | | | ○ | | |
| E | | | | | | | | | | | | | ○ | |
| F | | | | | | | | | | | | | | ○ |
| G | | | | | | | | | | | | ○ | ○ | ○ |
| H | ○ | | | | ○ | | | | ○ | | | | | |
| I | | ○ | | | | ○ | | | | | | | | |
| J | | | ○ | | | | ○ | | | ○ | | | | |
| K | | | | ○ | | | | ○ | | | ○ | | | |

## Claims

1. A suppressor for an unpleasant odor (off-flavor) from a food or beverage product, which comprises one or more members selected from the group consisting of oleic acid, β-damascenone, 4-methyl-2-phenyl-2-pentenal, menthyl 3-hydroxybutyrate, dimethyl benzyl carbinyl butyrate and methyl 4-TERT-butylphenylacetate as an active ingredient(s).

2. The suppressor for an unpleasant odor (off-flavor) from a food or beverage product according to claim 1, which may further comprise one or more members selected from the group consisting of 2,3-hexanedione, thymol, lauric acid, carvacrol and isoambrettolide.

3. The suppressor according to claim 1 or 2, wherein the food or beverage product comprises one or more members selected from the group consisting of a plant-derived food or beverage product, a processed meat product and an edible processed fat or oil.

4. The suppressor according to claim 3, wherein the plant is a pulse.

5. The suppressor according to claim 4, wherein the pulse is soybean.

6. The suppressor according to any one of claims 1 to 5, wherein the unpleasant odor (off-flavor) is a n-hexanal odor.

7. A flavor composition for suppressing an unpleasant odor (off-flavor) derived from a plant-derived food or beverage product, a processed meat product or an edible processed fat or oil, which comprises one or more members selected from the group consisting of oleic acid, β-damascenone, 4-methyl-2-phenyl-2-pentenal, menthyl 3-hydroxybutyrate, dimethyl benzyl carbinyl butyrate and methyl 4-TERT-butylphenylacetate as an active ingredient(s).

8. The flavor composition for suppressing an unpleasant odor (off-flavor) derived from a plant-derived food or beverage product, a processed meat product or an edible processed fat or oil according to claim 7, which may further comprise one or more members selected from the group consisting of 2,3-hexanedione, thymol, lauric acid, carvacrol and isoambrettolide.

9. The flavor composition according to claim 7 or 8, wherein the plant is a pulse.

10. The flavor composition according to claim 9, wherein the pulse is soybean.

11. The flavor composition according to any one of claims 7 to 10, wherein the unpleasant odor (off-flavor) is a n-hexanal odor.

12. A food or beverage product comprising one or more members selected from the group consisting of a plant-derived food or beverage product, a processed meat product and an edible processed fat or oil, wherein the food or beverage product comprises one or more members selected from the group consisting of oleic acid, β-damascenone, 4-methyl-2-phenyl-2-pentenal, menthyl 3-hydroxybutyrate, dimethyl benzyl carbinyl butyrate and methyl 4-TERT-butylphenylacetate as an active ingredient(s).

13. The food or beverage product comprising one or more members selected from the group consisting of a plant-derived food or beverage product, a processed meat product and an edible processed fat or oil according to claim 12, which may further comprise one or more members selected from the group consisting of 2,3-hexanedione, thymol, lauric acid, carvacrol and isoambrettolide.

14. The food or beverage product according to claim 12 or 13, wherein the plant is a pulse.

15. The food or beverage product according to claim 14, wherein the pulse is soybean.

16. The food or beverage product according to any one of claims 12 to 15, wherein the unpleasant odor (off-flavor) is a n-hexanal odor.

17. A production process for a food or beverage product, which comprises adding one or more members selected from the group consisting of oleic acid, β-damascenone, 4-methyl-2-phenyl-2-pentenal, menthyl 3-hydroxybutyrate, dimethyl benzyl carbinyl butyrate and methyl 4-TERT-butylphenylacetate, such that the one or more members are contained in the concentration range of 0.01 ppt to 100 ppm.

18. The production process for a food or beverage product according to claim 17, which comprises further adding one or more members selected from the group consisting of 2,3-hexanedione, thymol, lauric acid, carvacrol and isoambrettolide.

19. The production process according to claim 17 or 18, wherein the food or beverage product comprises one or more members selected from the group consisting of a plant-derived food product, a processed meat product and an edible processed fat or oil.

20. The production process according to claim 19, wherein the plant is a pulse.

21. The production process according to claim 20, wherein the pulse is soybean.

22. A masking method for an unpleasant odor (off-flavor) derived from a plant-derived food or beverage product, a processed meat product or an edible processed fat or oil, which comprises adding one or more members selected from the group consisting of oleic acid, β-damascenone, 4-methyl-2-phenyl-2-pentenal, menthyl 3-hydroxybutyrate, dimethyl benzyl carbinyl butyrate and methyl 4-TERT-butylphenylacetate, such that the one or more members are contained as an active ingredient(s).

23. The masking method for an unpleasant odor (off-flavor) derived from a plant-derived food or beverage product, a processed meat product or an edible processed fat or oil according to claim 22, which comprises further adding one or more members selected from the group consisting of 2,3-hexanedione, thymol, lauric acid, carvacrol and isoambrettolide.

24. The masking method according to claim 22 or 23, wherein the plant is a pulse.

25. The masking method according to claim 24, wherein the pulse is soybean.

26. The masking method according to any one of claims 22 to 25, wherein the unpleasant odor (off-flavor) is a n-hexanal odor.
